# EUROPEAN PATENT SPECIFICATION

(11) **EP 1 031 807 B1**
(45) Date of publication and mention of the grant of the patent: **09.02.2005**
(21) Application number: 00103962.7
(22) Date of filing: 25.02.2000
(51) Int. Cl.: F28D 7/10, F28D 7/02

(54) **Cylindrical heat-exchanger**
Zylindrischer Wärmetauscher
Echangeur de chaleur cylindrique

(30) Priority: 26.02.1999 JP 5152099
(43) Date of publication of application: 30.08.2000
(73) Proprietor: HOSHIZAKI DENKI KABUSHIKI KAISHA, Toyoake-shi, Aichi-ken (JP)
(72) Inventor: Yamamoto, Jiro, Yokkaichi-shi, Mie-ken (JP)
(74) Representative: Kramer - Barske - Schmidtchen

(56) References cited:
- DE-A- 3 702 963
- FR-A- 1 409 932
- JP-A- 55 025 735
- US-A- 3 997 002
- PATENT ABSTRACTS OF JAPAN vol. 016, no. 456 (M-1314), 22 September 1992 (1992-09-22) -& JP 04 161798 A (SHOWA ALUM CORP), 5 June 1992 (1992-06-05)
- PATENT ABSTRACTS OF JAPAN vol. 017, no. 041 (M-1359), 26 January 1993 (1993-01-26) -& JP 04 260789 A (SHOWA ALUM CORP), 16 September 1992 (1992-09-16)
- PATENT ABSTRACTS OF JAPAN vol. 1997, no. 08, 29 August 1997 (1997-08-29) -& JP 09 105592 A (MITSUBISHI ELECTRIC CORP), 22 April 1997 (1997-04-22)
- PATENT ABSTRACTS OF JAPAN vol. 1998, no. 09, 31 July 1998 (1998-07-31) -& JP 10 111053 A (HOSHIZAKI ELECTRIC CO LTD), 28 April 1998 (1998-04-28)

## Description

The present invention relates to a cylindrical heat-exchanger adapted for use in a freezing system of an ice making machine such as an auger type ice flake maker, an ice creamer, a frozen carbonic acid beverage maker and the like.

Disclosed in Japanese Patent Laid-open Publication No. 55-25735 is a cylindrical heat-exchanger comprised of an inner cylinder formed with external and internal smooth surfaces and an outer cylinder formed at its internal surface with a spiral groove in a predetermined extent and at its opposite end portions with an inlet and an outlet. The inner cylinder is coupled within and brazed to the outer cylinder so that a spiral refrigerant passage in open communication with the inlet and outlet of the outer cylinder is formed by the spiral groove.

In the manufacturing process of the cylindrical heat-exchanger, the external surface of the inner cylinder is welded to the internal surface of the outer cylinder by a brazing process in a high temperature furnace. Thereafter, an inlet pipe is brazed to the inlet of the outer cylinder for connection to a freezing circuit, and an outlet pipe is brazed to the outlet of the outer cylinder. In addition, a water supply pipe is fixedly connected to a bottom portion of the inner cylinder.

The inlet and outlet pipes each are in the form of a copper pipe for connection to a copper piping of the freezing circuit, and the water supply pipe is connected to the inner cylinder through a rubber seal and fixed in place by caulking to prevent leakage of water at its connected portion. As the component parts of the heat-exchanger are made of various materials such as stainless steel, copper, rubber, etc. as described above, it is required to disassemble the component parts for recycle when the heat-exchanger is disposed. This results in an increase of the recycle cost of the component parts.

During the brazing process of the inlet and outlet pipes at the inlet and outlet of the outer cylinder, there is a possibility of occurrence of undesired pin holes in the brazed portion. In the case that the heat-exchanger is used in a condition where the pin holes in the brazed portion are expanded by freeze of water impregnated therein, the sealing performance of the refrigerant flow passage is deteriorated in a short period of time.

JP 04 161 798 A relates to a double tube heat exchanger having an inner tube and an outer tube. On outer peripheries at both ends of the inner tube brazing materials are disposed. The inner tube is connected to the inner surfaces of the outer tube through the brazing materials. Thereafter an inlet pipe and an outlet pipe are attached to the outer tube, respectively.

It is, therefore, a primary object of the present invention to provide a manufacturing method suitable for a heat-exchanger overcoming the problems discussed above.

According to an aspect of the present invention, there is provided a manufacturing method for a cylindrical heat-heat exchanger comprising the features of claim.

For a better understanding of the present invention, and to show how the same may be carried out into effect, reference will now be made, by way of example, to the accompanying drawings, in which:
Fig. 1 is a partly broken sectional view of a cylindrical heat-exchanger used in a freezing system of an auger type ice flake maker in accordance with the present invention;
Fig. 2 is a cross-sectional view taken along line 2-2 in Fig. 1;
Fig. 3 is an illustration of a process of assembling inlet and outlet pipes with an outer cylindrical casing of the cylindrical heat-exchanger shown in Fig. 1;
Fig. 4 is an illustration of a process of coating brazing nickel alloy onto the outer cylindrical casing of the cylindrical heat-exchanger shown in Fig. 1;
Fig. 5 is an illustration of a process of assembling an inlet pipe with an inner cylinder of the cylindrical heat-exchanger and a process of assembling the outer cylindrical casing with the inner cylinder;
Fig. 6 is an illustration of a process of assembling annular flanges with the inner cylinder of the cylindrical heat-exchanger;
Fig. 7 is a partly broken sectional view of the annular flanges assembled with the inner cylinder; and
Fig. 8 is an illustration of a process of coating a brazing alloy onto the inner cylinder of the cylindrical heat-exchanger shown in Fig. 1.

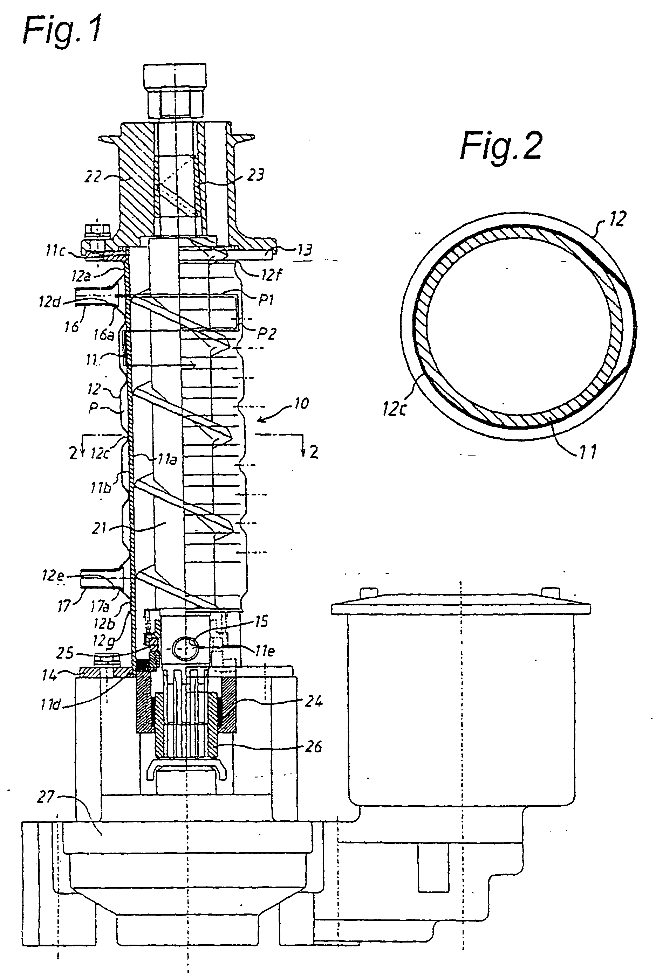

Illustrated in Fig. 1 of the drawings is a cylindrical heat-exchanger used in a freezing system of an auger type ice flake maker in accordance with the present invention. The cylindrical heat-exchanger 10 is comprised of an inner cylinder 11 formed with internal and external cylindrical smooth surfaces 11a and 11b and an outer cylindrical casing 12 formed at its opposite ends with a pair of cylindrical portions 12a, 12b of small diameter and at its intermediate portion with a plurality of vertically equally spaced cylindrical portions 12c of small diameter which are partly enlarged in diameter alternately at opposite sides thereof. Other component parts of the ice making machine such as an auger 21, an upper housing 22, a bearing metal 23, a lower housing 24, a mechanical seal 25, a connection sleeve 26 and a geared motor 27 are conventional parts well known in the prior art.

The inner cylinder 11 is made of stainless steel such as austenitic stainless steel and is provided at its upper and lower end stepped portions 11c, 11d with annular flanges 13 coupled therewith and welded thereto by a brazing process in a vacuum furnace. The inner-cylinder 11 has a lower end portion formed with a stepped mounting hole 11e for connection with a pipe 15 of austenitic stainless steel for supply and discharge of ice making water. The stainless steel pipe 15 is coupled at its one end with the stepped portion of mounting hole 11e and welded in place by brazing in the vacuum furnace. The stainless steel pipe 15 is connected to a water supply pipe (not shown) for introducing fresh water from a water tank (not shown) into the inner cylinder 11 or connected to an drain pipe (not shown) for discharging the water from the inner cylinder 11 into a drain (not shown).

The outer cylindrical casing 12 is made of thin stainless steel such as austenitic stainless steel and is formed in a bellows shape symmetrically at its upper and lower portions. The outer cylindrical casing 12 is coupled with and welded to the inner cylinder 11 by brazing in the vacuum furnace in a condition where the cylindrical portions 12a, 12b and vertically equally spaced cylindrical portions 12c of small diameter are retained in contact with the external cylindrical surface 11b of inner cylinder 11. The outer cylindrical casing 12 is formed at its upper end portion with an inlet 12d for introduction of refrigerant and at its lower end portion with an outlet 12e for discharge of the refrigerant. An inlet pipe 16 of austenitic stainless steel is welded to the inlet 12d of outer cylindrical casing 12 by brazing in the vacuum furnace for connection to an expansion valve (not shown) in the freezing circuit through a piping thereof. An outlet pipe 17 of austenitic stainless steel is welded to the outlet 12e of outer cylindrical casing 12 by brazing in the vacuum furnace for connection to a compressor (not shown) in the freezing circuit through a piping thereof. The inlet and outlet pipes 16 and 17 are formed in the same shape and flared at their inner ends respectively for engagement with the inlet 12d and outlet 12e of outer cylindrical casing 12. In addition, the outer cylindrical casing 12 is formed at its upper and lower ends with radially outwardly flared portions 21f, 21g.

In the cylindrical heat-exchanger 10, a refrigerant passage P is formed between the inner cylinder 11 and outer cylindrical casing 12. The refrigerant passage P consists of a plurality of vertically equally spaced annular passages P1 and a plurality of vertically equally spaced communication passages P2 providing a communication between the annular passages P1 adjacent thereto. The refrigerant passage P is in open communication with the inlet 12d at its upper end and in open communication with the outlet 12e at its lower end. The communication passages P2 are formed alternately at opposite sides of the inner cylinder 11 to provide the refrigerant passage P in the form of a zigzag passage.

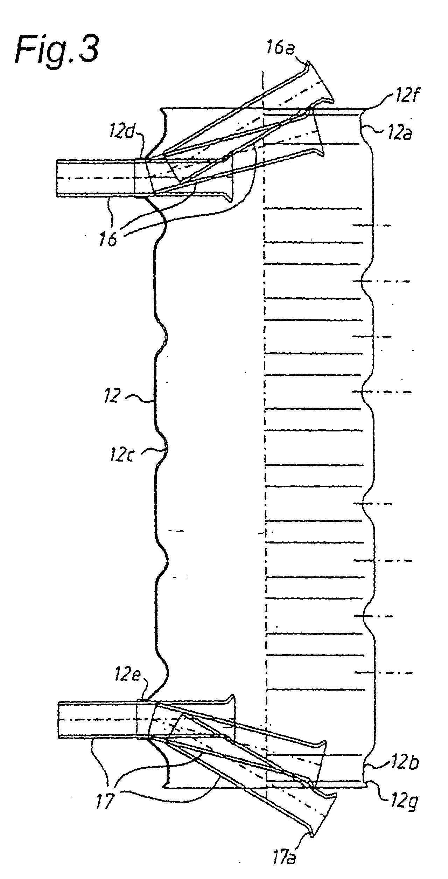

Hereinafter, a manufacturing process of the cylindrical heat-exchanger will be described in detail with reference to Figs. 3 to 7. As shown in Fig. 3, the outer cylindrical casing 12 is formed by a bulge forming process to provide the cylindrical portions 12a, 12b and radially outwardly flared portions 12f, 12g at its opposite ends, and the inlet and outlet pipes 16 and 17 are inserted into the inlet 12d and outlet 12e from the inside of outer cylindrical casing 12 respectively in such a manner that the flared inner ends 16a and 17a of pipes 16 and 17 are engaged with each cylindrical internal surface and tapered surface of the inlet 12d and outlet 12e. After inserted into the inlet 12d and outlet 12e, the inlet and outlet pipes 16 and 17 are radially outwardly expanded at their straight tubular portions 16b, 17b by a mechanical process and preliminarily fixed to the inlet 12d and outlet 12d of outer cylinder 12.

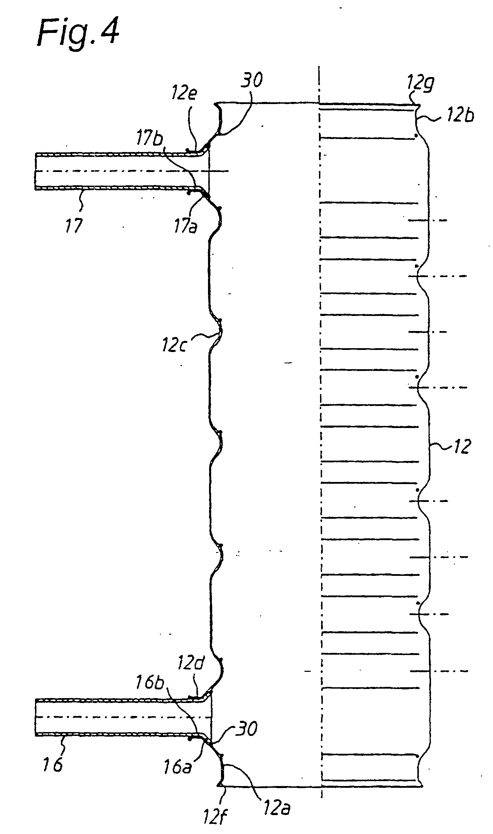

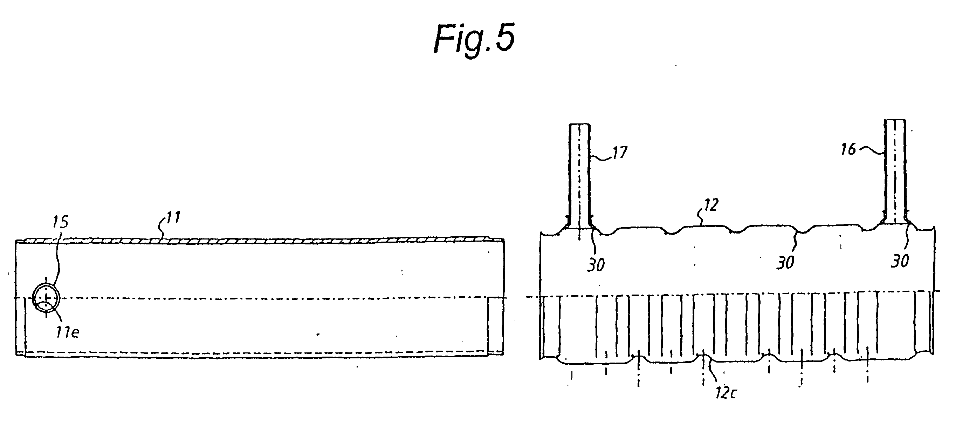

Subsequently, as shown in Fig. 4, the outer cylindrical casing 12 is set up in a condition where the outlet pipe 17 is positioned above. In such a condition, as shown by black dots in Fig. 4, the inner end surfaces of inlet and outlet pipes 16 and 17 and the internal surfaces of cylindrical portions 12a, 12b, 12c of outer cylindrical casing 12 are coated with brazing nickel alloy 30 , and the outer ends of inlet 12d and outlet 12e are coated with brazing nickel alloy 30 at their entire peripheries. At the following step, as shown in Fig. 5, the stainless steel pipe 15 is coupled with the mounting hole 11e of inner cylinder 11 at its one end stepped portion and secured in place by TIG welding or caulking. Thereafter, the outer cylindrical casing 12 is coupled over the inner cylinder 11.

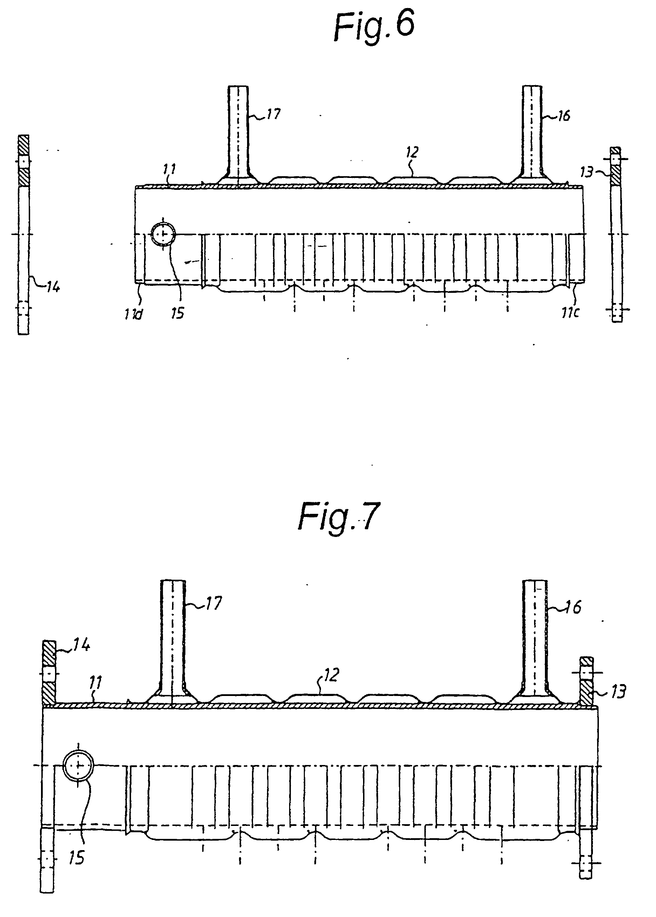

Illustrated in Figs. 6 and 7 is a process of assembling annular flanges 13, 14 with the inner cylinder 11. The annular flanges 13, 14 are coupled with opposite stepped ends 11c, 11d of the inner cylinder 11 by press-fit at the same time. In this instance, the surfaces of the opposite stepped ends 11c, 11d of inner cylinder 11 and the inner peripheries of annular flanges 13, 14 are coarsely finished at a degree of about 25S to ensure adherence of the brazing nickel alloy 30. In the assembly process, the annular flanges 13, 14 may be loosely coupled with the opposite stepped ends 11c, 11d of inner cylinder 11 and welded in place by TIG welding.

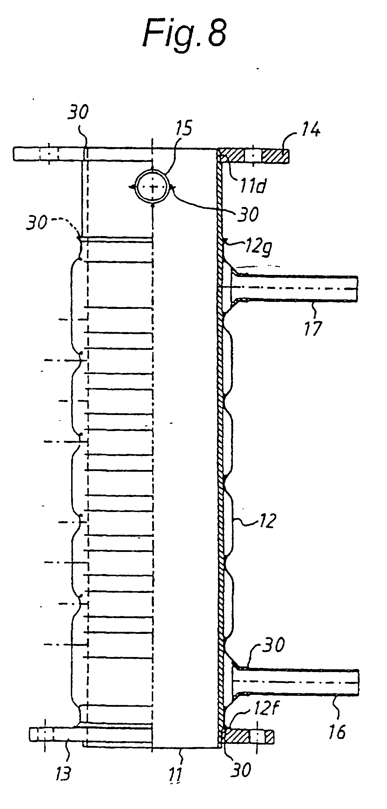

Illustrated in Fig. 8 is a process of coating brazing nickel alloy onto the inner cylinder 11. In a condition where the inner cylinder 11 coupled within the outer cylindrical casing 12 have been set up such that the annular flange 14 is located above, the entire periphery of the radially outwardly flared portion 12f of outer cylindrical casing 12 in engagement with the annular flange 13 is coated with brazing nickel 30 as shown by black dots in the figure, and the entire periphery of the radially outwardly flared portion 12g of outer cylinder 12 is coated with brazing nickel 30 as shown by black dots in the figure. In addition, the entire periphery of the upper end of inner cylinder 11 is coated with brazing nickel 30 at a portion jointed to the annular flange 14, and the entire periphery of the stainless steel pipe 15 is coated with brazing nickel 30 at a portion jointed to the inner cylinder 11 as shown by black dots in the figure.

A number of assembly unites as shown in Fig. 8 are heated at a temperature higher than the melting point of brazing nickel in a high vacuum furnace (not shown) so that the brazing nickel is melted and impregnates in the assembled portions. Thus, the component parts (the inner cylinder 11, outer cylindrical casing 12, annular flanges 13, 14 and pipes 15, 16, 17) of stainless steel of the respective assembly units are integrally welded by the brazing nickel alloy 30 in a fluid-tight manner. After the furnace has been cooled, the assembly units are subjected to an appropriate heat treatment such as a solution treatment. In a finishing process of the assembly unites, the inner cylinder 11 is formed at its internal surface with a plurality of circumferentially equally spaced vertical grooves (not shown) by a machining process to complete a cylindrical heat exchanger 10.

In the cylindrical heat-exchanger 10 manufactured by the foregoing processes, both the brazing of inner and outer cylinders 11 and 12 and the brazing of the component parts (annular flanges 13, 14, pipes 15, 16, 17) jointed to the cylinders are carried out simultaneously in the vacuum furnace. This is very useful to reduce the assembly steps of the component parts during the manufacturing process thereby to reduce the manufacturing cost of the heat exchanger. Since both the brazing of inner and outer cylinders 11 and 12 and the brazing of the component parts are carried out in the vacuum furnace to restrain undesired strain or deformation of the component parts, the machining precision of the inner cylinder 11 is enhanced, and the cylindrical heat exchanger can be uniformed in quality by the heat treatment such as a solution treatment under control of the heating and cooling processes in the furnace.

As the brazing nickel alloy used in the manufacture of the heat-exchanger is essentially comprised of nickel containing chromium without copper, the component parts of stainless steel can be recycled at a low cost without disassembled when the heat exchanger is disposed. During the brazing process of the component parts in the vacuum furnace, any pin hole does not occur in the brazed portions of the component parts. This is useful to ensure the strength and durability of the brazed portions in the case that the heat exchanger is adapted for use in an auger type ice flake maker as in the embodiment described above.

In the cylindrical heat-exchanger, the inner cylinder 11 is brazed to the outer cylindrical casing 12 in a fluid-tight manner in a condition where the cylindrical portions 12a, 12b and vertically spaced cylindrical portions 12c of small diameter are retained in contact with the external cylindrical surface 11b of inner cylinder 11. Thus, formed between the inner and outer cylinders 11 and 12 is a refrigerant flow passage P in the form of a zigzag passage which is comprised a plurality of vertically equally spaced annular passages P1 and communication passages P2 providing a communication between the annular passages P1 adjacent thereto at a position displaced in a circumferential direction. In the heat exchanger, the refrigerant introduced from the inlet 12 into the refrigerant passage P flows through the annular passages P1 and communication passages P2 in sequence and is discharged from the outlet 12. In such an instance, the refrigerant flowing through the annular passage P1 in one direction at a step flows in an opposite direction through the annular passage P1 at the following step. That is to say, the refrigerant flows along the external surface of inner cylinder 11 at the bottom of the respective annular passages P1. As a result, the heat exchange between the refrigerant and inner cylinder 11 in refrigerant flow passage P is sufficiently effected to enhance the efficiency of heat exchange between the refrigerant and the ice making water supplied into the inner cylinder 11.

In the cylindrical heat-exchanger 10, it is to be noted that the communication passages P2 forming the refrigerant flow passage P are alternately located at a radially opposed position to prolong the entire length of the refrigerant flow passage P between the inlet 12d and outlet 12e. With such arrangement of the communication passages P2, the dwell time of refrigerant in the flow passage P is sufficiently obtainable to enhance the efficiency of heat exchange.

Although in the embodiment described above, the refrigerant passage P has been formed by the vertically equally spaced annular passages P and communication passages P2, the outer cylindrical casing 12 may be formed at its internal surface with a spiral protrusion to provide a spiral refrigerant passage between the inner cylinder 11 and outer cylindrical casing 12. Although in the embodiment described above, the present invention has been adapted to a cylindrical heat-exchanger for use in a freezing system of an auger type ice flake maker, the heat-exchanger may be adapted for use in a soft ice creamer, a frozen carbonic acid beverage maker and the like.

## Claims

1. A manufacturing method of a cylindrical heat-exchanger
comprised of an inner cylinder (11) formed with external and internal cylindrical surfaces (11a,11b), an outer cylindrical casing (12) having a pair of cylindrical portions (12a, 12b) of small diameter formed at opposite ends thereof and an intermediate portion formed at its internal surface, and component parts (13, 14, 15, 16, 17) assembled with the inner cylinder (11) and outer cylindrical casing (12), comprising the steps of:
assembling the component parts (13 - 17) with the inner cylinder (11) and outer cylindrical casing (12);
coupling the inner cylinder (11) within the outer cylindrical casing (12) so that the intermediate portion of the outer cylindrical casing is retained in contact with the external cylindrical surface (11b) of the inner cylinder (11) to form a refrigerant flow passage (P) in open communication with an inlet (12d) and an outlet (12e) at the opposite end portions of the outer cylindrical casing (12); and
brazing the inner cylinder (11) to the opposite ends (12a, 12b) of the outer cylindrical casing (12) at the external cylindrical surface thereof in a furnace;
**characterized in that**
the component parts (13 - 17) are simultaneously brazed to the inner cylinder and outer cylindrical casing in the furnace, when the inner cylinder is brazed to the opposite ends of the outer cylindrical casing.

2. A manufacturing method of a cylindrical heat-exchanger as claimed in claim 1, wherein the inner cylinder (11), outer cylindrical casing (12) and component parts (13 - 17) are made of stainless steel and welded by brazing nickel alloy in a vacuum furnace.

3. A manufacturing method of a cylindrical heat exchanger as claimed in claim 1 or 2, wherein the outer cylindrical casing (12) is formed at its internal surface with a plurality of equally spaced cylindrical portions (12c) of small diameter which are partly enlarged in diameter alternately at opposite sides thereof, to form the refrigerant flow passage.

4. A manufacturing method of a cylindrical heat exchanger as claimed in claim 1 or 2, wherein the outer cylindrical casing (12) is formed at its internal surface with a spiral protrusion to provide the refrigerant flow passage in a spiral form.

5. A manufacturing method of a cylindrical heat-exchanger as claimed in any one of claims 1 to 4, wherein the component parts (13, 14, 15, 16, 17) are brazed in a vacuum furnace, when the inner cylinder (11) is brazed at its external cylindrical surface to the opposite ends of the outer cylindrical casing (12) in the vacuum furnace.

## Patentansprüche

1. Herstellungsverfahren für einen zylindrischen Wärmetauscher, der einen inneren Zylinder (11), der mit einer externen und einer internen zylindrischen Fläche (11a, 11b) gebildet ist, ein äußeres zylindrisches Gehäuse (12), das ein Paar von zylindrischen Bereichen (12a, 12b) mit kleinerem Durchmesser, die an gegenüberliegenden Enden des zylindrischen Gehäuses geformt sind, und einen Zwischenbereich, der an seiner Innenoberfläche geformt ist, aufweist, und Bauteile (13, 14, 15, 16, 17) enthält, die mit dem inneren Zylinder (11) und dem äußeren zylindrischen Gehäuse (12) zusammengesetzt werden, das Herstellungsverfahren enthaltend die Schritte:
Zusammensetzen der Bauteile (13 bis 17) mit dem inneren Zylinder (11) und dem äußeren zylindrischen Gehäuse;
Verbinden des inneren Zylinders (11) innerhalb des äußeren zylindrischen Gehäuses (12) derart, dass der Zwischenbereich des äußeren, zylindrischen Gehäuses in Berührung mit der externen zylindrischen Oberfläche (11b) des inneren Zylinders (11) gehalten wird zum Ausbilden eines Kühlmittelströmungsdurchlasses (P) in offener Verbindung mit einem Einlass (12d) und einem Auslass (12e) an den gegenüberliegenden Endbereichen des äußeren zylindrischen Gehäuses (12);
Verlöten des inneren Zylinders (11) mit den gegenüberliegenden Enden (12a, 12b) des äußeren zylindrischen Gehäuses (12) an seiner externen zylindrischen Oberfläche in einem Ofen;
**dadurch gekennzeichnet, dass**
die Bauteile (13 bis 17) gleichzeitig mit dem inneren Zylinder und dem äußeren zylindrischen Gehäuse in dem Ofen verlötet werden, wenn der innere Zylinder mit den gegenüberliegenden Enden des äußeren zylindrischen Gehäuses verlötet wird.

2. Herstellungsverfahren für einen zylindrischen Wärmetauscher nach Anspruch 1, wobei der innere Zylinder (11), das äußere zylindrische Gehäuse (12) und die Bauteile (13 bis 17) aus Edelstahl gefertigt sind und durch Verlöten von Nickellegierung in einem Vakuumofen verschweisst werden.

3. Herstellungsverfahren für einen zylindrischen Wärmetauscher nach Anspruch 1 oder 2, wobei das äußere zylindrische Gehäuse (12) an seiner inneren Oberfläche mit einer Mehrzahl von gleichmäßig beabstandeten zylindrischen Bereichen (12c) von kleinem Durchmesser, die teilweise im Durchmesser wechselweise an gegenüberliegenden Seiten davon vergrößert sind, zum Ausbilden des Kühlmittelströmungsdurchlasses gebildet ist.

4. Herstellungsverfahren für einen zylindrischen Wärmetauscher nach Anspruch 1 oder 2, wobei das äußere zylindrische Gehäuse (12) an seiner inneren Oberfläche mit einem spiralförmigen Vorsprung gebildet ist, um den Kühlmittelströmungsdurchlass in Spiralform vorzusehen.

5. Herstellungsverfahren für einen zylindrischen Wärmetauscher nach einem der Ansprüche 1 bis 4, wobei die Bauteile (13, 14, 15, 16, 17) in einem Vakuumofen verlötet werden, wenn der innere Zylinder (11) an seiner externen, zylindrischen Oberfläche mit den gegenüberliegenden Enden des äußeren zylindrischen Gehäuses (12) in dem Vakuumofen verlötet wird.

## Revendications

1. Procédé de fabrication d'un échangeur de chaleur cylindrique composé d'un cylindre intérieur (11) formé avec des surfaces cylindriques extérieures et intérieures (11a, 11b), un carter cylindrique extérieur (12) possédant une paire de parties cylindriques (12a, 12b) de petit diamètre formées au niveau de ses extrémités opposées et une partie intermédiaire formée au niveau de sa surface intérieure, et des composants (13, 14, 15, 16, 17) assemblés avec le cylindre intérieur (11) et le carter cylindrique extérieur (12), comprenant les étapes consistant à :
assembler les composants (13 - 17) avec le cylindre intérieur (11) et le carter cylindrique extérieur (12) ;
relier le cylindre intérieur (11) à l'intérieur du carter cylindrique extérieur (12) de telle sorte que la partie intermédiaire du carter cylindrique extérieur soit maintenue en contact avec la surface cylindrique extérieure (11b) du cylindre intérieur (11) pour former un passage de fluide réfrigérant (P) en communication ouverte avec une entrée (12d) et une sortie (12e) au niveau des parties d'extrémité opposées du carter cylindrique extérieur (12) ; et à
braser dans un four le cylindre intérieur (11) au niveau de la surface cylindrique extérieure de celui-ci aux extrémités opposées (12a, 12b) du carter cylindrique extérieur (12);
**caractérisé en ce que**
les composants (13 - 17) sont brasés simultanément au cylindre intérieur et au carter cylindrique extérieur dans le four, lorsque le cylindre intérieur est brasé aux extrémités opposées du carter cylindrique extérieur.

2. Procédé de fabrication d'un échangeur de chaleur cylindrique selon la revendication 1, dans lequel le cylindre intérieur (11), le carter cylindrique extérieur (12) et les composants (13 - 17) sont réalisés en acier inoxydable et soudés à l'aide d'un brasage en alliage de nickel dans un four à vide.

3. Procédé de fabrication d'un échangeur de chaleur cylindrique selon la revendication 1 ou 2, dans lequel le carter cylindrique extérieur (12) est formé au niveau de sa surface intérieure avec une pluralité de parties cylindriques équidistantes (12c) de petit diamètre qui sont en partie agrandies en diamètre alternativement au niveau de leurs côtés opposés, pour former le passage de fluide réfrigérant.

4. Procédé de fabrication d'un échangeur de chaleur cylindrique selon la revendication 1 ou 2, dans lequel le carter cylindrique extérieur (12) est formé au niveau de sa surface intérieure avec une protubérance en spirale pour fournir le passage de fluide réfrigérant en forme de spirale.

5. Procédé de fabrication d'un échangeur de chaleur cylindrique selon l'une quelconque des revendications 1 à 4, dans lequel les composants (13, 14, 15, 16, 17) sont brasés dans un four à vide, lorsque le cylindre intérieur (11) est brasé dans le four de vide au niveau de sa surface cylindrique extérieure aux extrémités opposées du carter cylindrique extérieur (12).
